# EUROPEAN PATENT APPLICATION

(11) **EP 4 834 073 A1**
(43) Date of publication of application: **04.11.2026**
(21) Application number: 23963110.4
(22) Date of filing: 27.12.2023
(51) Int. Cl.: A01C 7/16, B64D 1/16

(54) **AGRICULTURAL MATERIAL EJECTION DEVICE**

(71) Applicant: KUBOTA CORPORATION, Osaka-shi, Osaka 530-0011 (JP)
(72) Inventor: TORIMOTO, Masaru, Sakai-shi, Osaka 590-0908 (JP)
(74) Representative: Cabinet Beau de Loménie
(86) International application number: PCT/JP2023/046921
(87) International publication number: WO 2025/141761

(57) **Abstract**

There has been a demand for an agricultural material injection apparatus capable of supplying an agricultural material at predetermined intervals even in a case of employing a configuration in which the agricultural material can be injected to a supply target location without causing problems such as crushing or clogging of agricultural material. A storage section configured to store the agricultural material, a feed section configured to feed the agricultural material stored in the storage section, an injection mechanism configured to inject the agricultural material fed by the feed section from an injection outlet to the supply target location, and a control section configured to control an operation of the injection mechanism are provided. The injection mechanism includes an injection unit UT having a plurality of injection outlets 9 at different positions along a traveling direction of the aircraft, and the control section controls the operation of the injection mechanism in such a manner as to cause the injection unit UT to inject the agricultural material from the plurality of injection outlets 9 and thereafter move to a location corresponding to a next material supply location, and subsequently to cause the injection unit UT to inject the agricultural material.

## Description

### Technical Field

The present invention relates to an agricultural material injection apparatus configured to be suspended and supported by an aircraft and to supply a granular agricultural material to a supply target location.

### Background Art

Conventionally, as an example of an agricultural material injection apparatus, there has been a seeding machine configured as follows.

The seeding machine includes a tank that stores seed as an example of an agricultural material, a feed mechanism that feeds the seed from the lower side of the tank, a shooter unit that drives the fed seed in a field, and a cylindrical guide body extending in an up-down direction that guides the seed fed by the feed mechanism to the shooter unit. The shooter unit includes a rotating body having a plurality of blades, which extend radially and are driven to rotate at high speed, and is configured to inject the seed that is fed from the feed mechanism and falls downward through the interior of the guide body, downward using the blades of the rotating body (e.g., see Patent Document 1). Further, a plurality of guide bodies are arranged side by side, and the seed is injected downward to a plurality of locations (e.g., see Patent Document 1).

### Prior Art Documents

### Patent Documents

Patent Document 1: WO2021/182108

### Disclosure of the Invention

### Problem to be Solved by the Invention

In the above conventional configuration, the agricultural material needs to be forcefully injected downward by blade members rotated at high speed, and therefore the agricultural material is continuously injected without stopping. As a result, it is difficult to supply the agricultural material at predetermined intervals. Also, there is concern that the agricultural material may be caught between the blade members and the inner surface of the guide body, causing the agricultural material to be crushed, or causing clogging due to the agricultural material being caught, for example.

A configuration is conceivable in which, for example, the agricultural material is injected using compressed gas such that the agricultural material can be forcefully injected toward a supply target location without causing problems such as crushing or clogging of the agricultural material. However, this configuration requires time for an operation of compressing the gas between when the injection operation is performed once and when the next injection operation is performed, and there is a disadvantage in that it takes a long time before the injection is ready.

In view of this, there has been a demand for an agricultural material injection apparatus capable of supplying the agricultural material at predetermined intervals even in the case of employing a configuration in which the agricultural material can be injected to the supply target location without causing problems such as crushing or clogging of agricultural material.

### Means for Solving Problem

A characteristic configuration of an agricultural material injection apparatus according to the present invention lies in an agricultural material injection apparatus configured to be suspended and supported by an aircraft and to supply a granular agricultural material to a supply target location, the agricultural material injection apparatus including: a storage section configured to store the agricultural material; a feed section configured to feed the agricultural material stored in the storage section; an injection mechanism configured to inject the agricultural material fed by the feed section from an injection outlet to the supply target location; and a control section configured to control an operation of the injection mechanism, wherein the injection mechanism includes an injection unit having a plurality of injection outlets at different positions along a traveling direction of the aircraft, and the control section controls the operation of the injection mechanism in such a manner as to cause the injection unit to inject the agricultural material from the plurality of injection outlets and thereafter move to a location corresponding to a next material supply location, and subsequently to cause the injection unit to inject the agricultural material.

According to the present invention, the injection unit included in the injection mechanism has the plurality of injection outlets at different positions along the traveling direction of the aircraft. Thus, upon the injection mechanism executing an injection operation, the agricultural material is injected simultaneously from the plurality of injection outlets at different positions along the traveling direction of the aircraft. That is, the agricultural material can be injected more than once along the traveling direction. As a result, preparation for making the injection operation executable can be performed before the aircraft moves to a position where the next injection is to be performed.

Accordingly, it has become possible to provide an agricultural material injection apparatus capable of supplying the agricultural material at predetermined intervals even in the case of adopting a configuration in which the agricultural material can be forcefully injected to the supply target location without causing problems such as crushing or clogging of agricultural material, for example, a configuration in which the agricultural material is injected using compressed gas.

In the present invention, preferably, the injection unit includes the plurality of injection outlets arranged at different positions along a direction orthogonal to the traveling direction of the aircraft.

According to this configuration, a plurality of injection outlets are provided at different positions along the traveling direction of the aircraft, and a plurality of injection outlets are also provided at different positions along the direction orthogonal to the traveling direction. Thus, the number of agricultural materials injected at one time can be increased, and the working efficiency can be improved.

In the present invention, preferably, the injection unit is replaceable with another injection unit having a different arrangement pattern of the plurality of injection outlets.

According to this configuration, the arrangement pattern of the injection outlets can be switched to an appropriate one in accordance with a difference in the working situation, such as a difference in the agricultural material type or a difference in the external shape of the field serving as the supply target location.

In the present invention, preferably, the control section controls the operation of the injection mechanism in such a manner as to inject the agricultural material from a preset injection outlet out of the plurality of injection outlets.

According to this configuration, it is possible to perform appropriate work in accordance with the situation, for example, to appropriately inject the agricultural material into an area where it is to be supplied and not to supply the agricultural material into an area where it is not to be supplied, rather than to uniformly inject the agricultural material into the field serving as the supply target location.

In the present invention, preferably, the control section is capable of changing and setting a combination of the injection outlets for injecting the agricultural material out of the plurality of injection outlets.

According to this configuration, the combination of the injection outlets can be changed to an appropriate one in accordance with the working situation, for example, in the case where the agricultural material type is different, or in the case where the supply target location that is to be the work target is different.

In the present invention, preferably, the injection mechanism includes: a gas compression section configured to compress a gas; and a gas ejection section configured to eject the compressed gas to an outside, and is configured to inject the agricultural material with use of the gas ejected from the gas ejection section.

According to this configuration, the injection mechanism compresses the gas supplied from the gas supply section and ejects compressed gas from the gas ejection section to inject the agricultural material toward the supply target location. The agricultural material can be supplied to a target location using the thus-ejected gas. Only the compressed gas acts on the agricultural material, and the agricultural material does not collide with objects moving at high speed, nor are the agricultural material caught between the objects.

In the present invention, preferably, the gas compression section includes a cylinder tube and a piston configured to slide within the cylinder tube, and the gas ejection section ejects the gas supplied to an internal space of the cylinder tube and compressed, to an outside of the cylinder tube.

According to this configuration, a gas is supplied into and compressed in the internal space of the cylinder tube while the piston is stopped. Then, the piston moves to cause the gas ejection section to eject the compressed gas downward. The agricultural material is injected toward a supply target location by the ejected gas. With this configuration, a simple configuration can be adopted in which the gas is injected by compressing the gas and moving the piston.

### Brief Description of the Drawings

FIG. 1 is a front view illustrating a work system.
FIG. 2 is a plan view illustrating the work system.
FIG. 3 is a side view of a seeding apparatus.
FIG. 4 is a longitudinal cross-sectional view of an injection mechanism.
FIG. 5 is an explanatory view illustrating operation of the injection mechanism.
FIG. 6 is a control block diagram.
FIG. 7 is a plan view illustrating an arrangement pattern of injection outlets of an injection unit.
FIG. 8 is a perspective view of the injection unit.
FIG. 9 is an explanatory view illustrating operation of the injection unit.
FIG. 10 is an explanatory view illustrating operation of the injection unit.
FIG. 11 is an explanatory view illustrating operation of the injection unit.

### Best Mode for Carrying out the Invention

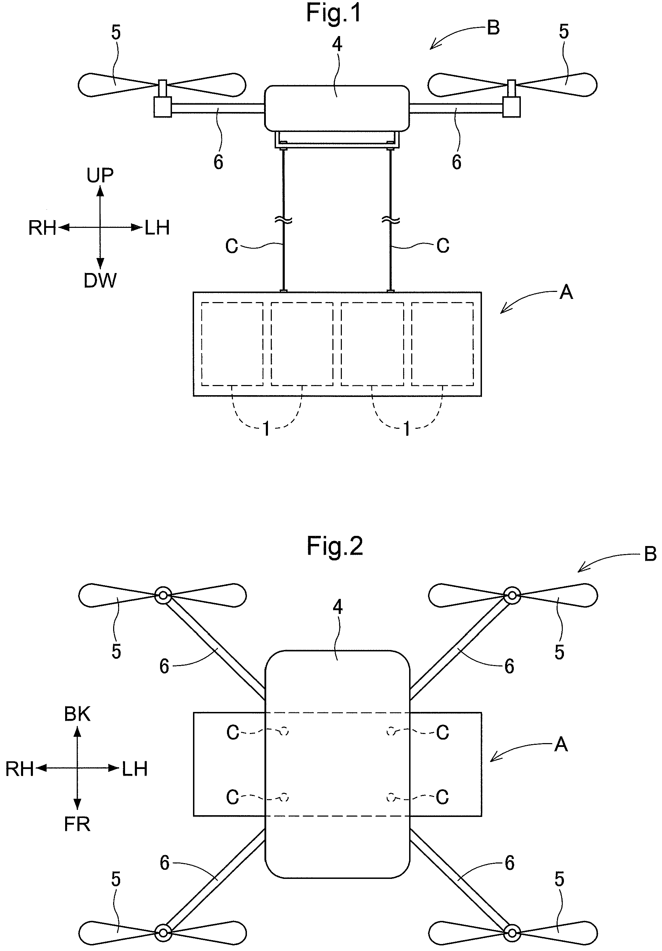

A mode for carrying out the present invention will be described below with reference to the drawings. Note that, unless otherwise stated in the following description, the term "front" refers to the direction indicated by arrow FR in FIG. 2, the term "rear" refers to the direction indicated by arrow BK, the term "left" refers to the direction indicated by arrow LH in FIGS. 1 and 2, and the term "right" refers to the direction indicated by arrow RH. The term "upper/above" refers to the direction indicated by arrow UP in FIG. 1, and the term "lower/below" refers to the direction indicated by arrow DW.

FIGS. 1 and 2 illustrate a work system for supplying seed serving as an agricultural material to a field. The work system includes a work unit A that includes a plurality of seeding apparatuses 1, each of which is as an example of an agricultural material injection apparatus according to the present invention, an unmanned aircraft B referred to as a drone, and a plurality of connection bodies C for the aircraft B to suspend and support the work unit A. The aircraft B is capable of flying independently. The aircraft B includes a main body 4, a plurality of propellers 5, and a plurality of arms 6.

Although the number of propellers 5 and arms 6 is not particularly limited, four propellers 5 and four arms 6 are provided in the present embodiment. The four arms 6 extend from the main body 4 toward front-left, front-right, rear-left, and rear-right directions, respectively.

Each propeller 5 is driven by driving force of an electric motor (not shown). The aircraft B is capable of flying by driving each propeller 5. That is, by driving the propellers 5, the aircraft B is capable of moving in the up-down direction, the front-back direction, and the left-right direction while floating in the air. The aircraft B is also capable of hovering flight by driving the propellers 5.

Each seeding apparatus 1 is suspended and supported by the main body 4 via a plurality of connection bodies C (e.g., wires). A plurality of seeding apparatuses 1 are arranged side by side at intervals in the left-right direction and integrally combined to constitute the work unit 2. Although a case of using four connection bodies C is illustrated as an example, the number thereof is not limited to four and may be changed as appropriate.

The seeding apparatus 1 injects seed N, which is an example of an agricultural material, whereby the seed N can be driven into and supplied to a field. Although not described in detail, the flight state of the aircraft B is managed such that the seeding apparatus 1 moves along a path along which seeding is to be performed. Here, the aircraft B may repeat movement operation and position-stopping operation, and may perform seeding work during the position-stopping operation. Alternatively, seeding work may be performed while continuously moving by the aircraft B.

Although not illustrated, the aircraft B includes a satellite positioning device having a known configuration, and a flight control section that drives and controls the propellers 5 to control the movement state of the aircraft B. The satellite positioning device receives GNSS (Global Navigation Satellite System) signals from artificial satellites and generates positioning data indicating a position of the aircraft B based on the received signals. As the GNSS, GPS, QZSS, Galileo, GLONASS, BeiDou, or the like can be used. The flight control section drives and controls the propellers 5 based on measurement results of the satellite positioning device and preset field map data such that the aircraft B moves along a predetermined work path.

Next, a configuration of the seeding apparatus 1 will be described.

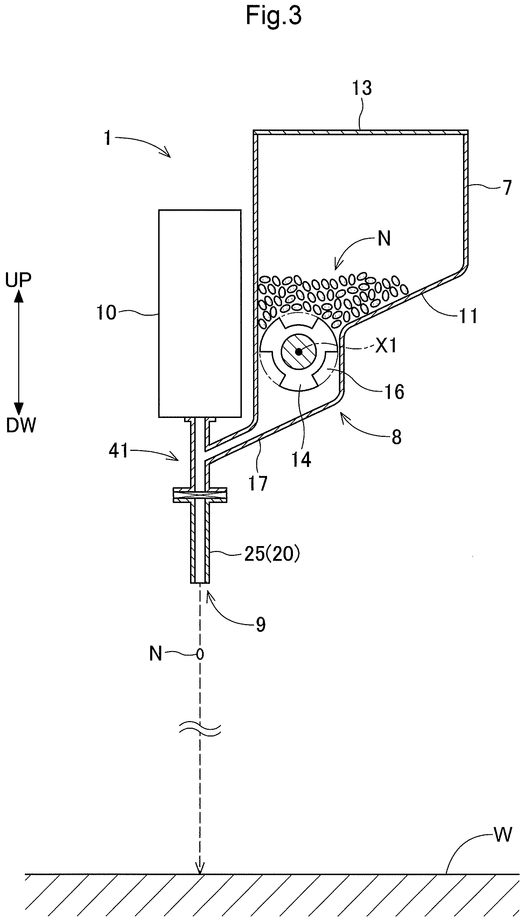

As illustrated in FIG. 3, the seeding apparatus 1 includes a hopper 7 serving as a storage section for storing seed N, a feed section 8 that feeds the seed N stored in the hopper 7, and an injection mechanism 10 that injects the seed N fed by the feed section 8 from an injection outlet 9 toward a field W serving as a supply target location.

The hopper 7 has a storage space surrounded by side walls. An opening is formed at an upper portion of the storage space, through which a large amount of seed N can be loaded. After the seed N is loaded, the opening is closed by a lid 13 that is attachable and detachable. A flow guide section 11 having a tapered shape narrowing toward the lower side is provided at a lower portion of the hopper 7. The seed N can be discharged downward from a lower portion of the flow guide section 11, and a feed roller 14 is provided at a discharging location.

The feed roller 14 is rotatably supported about an axis X1 extending in the left-right direction. Recesses 16 into which the seed N can enter are formed in an outer peripheral portion of the feed roller 14. A plurality of recesses 16 are formed at predetermined intervals in the circumferential direction. The feed roller 14 has a narrow width in the rotation axis direction such that one or several seeds N can enter each recess 16. The feed roller 14 is driven to rotate about the axis X1 by an electric motor (not shown).

As the feed roller 14 rotates, the seed N received in the recesses 16 is discharged downward. A cylindrical supply section 17 that guides the seed N discharged from the feed roller 14 is provided at a lower portion of the hopper 7.

The injection mechanism 10 is provided on a lateral side of the feed section 8, and the seed N fed from the feed section 8 is injected by the injection mechanism 10 and forcefully supplied toward the field W.

The seeding apparatus according to the present embodiment includes a compressor 32 serving as a gas supply section for supplying gas, the injection mechanism 10 that injects the seed N toward the field W by ejecting compressed gas supplied and compressed by the compressor 32, and a seeding control section H serving as a control unit that controls operations of the compressor 32 and the injection mechanism 10.

### [Injection Mechanism]

The injection mechanism 10 includes a cylinder tube 21 extending in the up-down direction, a piston 22 that slides within the cylinder tube 21, a gas ejection section 20 that ejects the gas supplied into an internal space of the cylinder tube 21 and compressed, downward from a lower portion of the cylinder tube 21 in accordance with movement of the piston 22, and a gas supply and discharge means 23 that is switchable between a supply state in which it supplies the gas into the internal space of the cylinder tube 21, and a release state in which the internal space is opened to the outside.

The gas supply and discharge means 23 is switchable between the supply state in which the gas is supplied into the internal space of the cylinder tube 21 and the release state in which the internal space is opened to the outside. The gas supply and discharge means 23 discharges the gas supplied in the internal space and compressed to the outside of the cylinder tube 21 from a discharge section 24 formed at a lower portion of the cylinder tube 21 in accordance with movement of the piston 22.

The gas ejection section 20 is provided in communication with the discharge section 24 and is constituted by a cylindrical guide member 25. The guide member 25 has an inner diameter that is smaller than an inner diameter of the cylinder tube 21 and that allows passage of seed N.

The injection mechanism 10 will now be described in more detail.

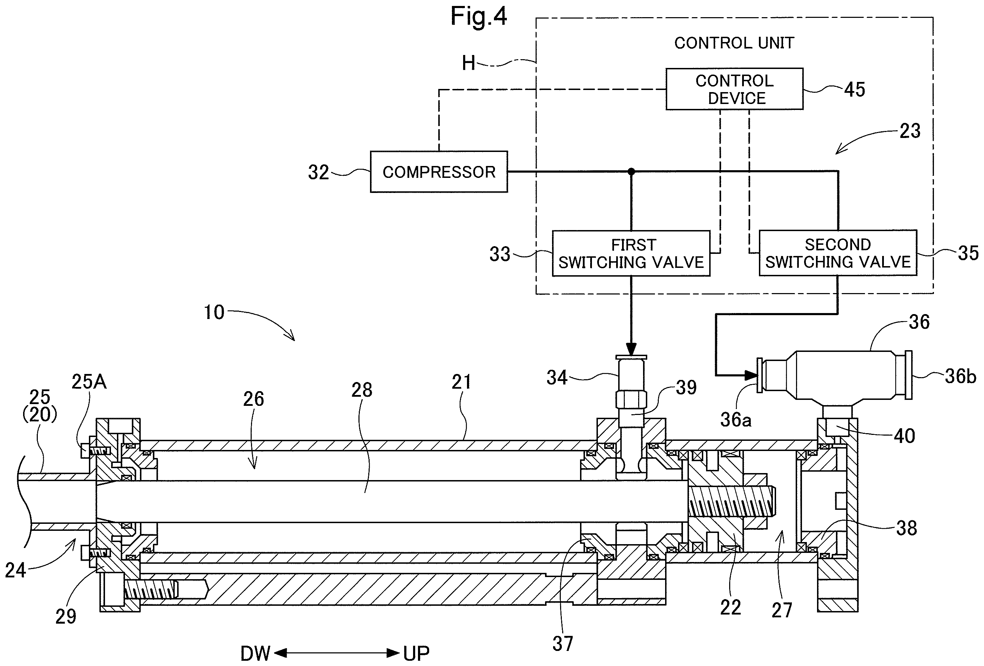

As shown in FIG. 4, the injection mechanism 10 includes the cylinder tube 21 and the piston 22 that slides within the cylinder tube 21. A first gas chamber 26 and a second gas chamber 27 are provided as internal spaces inside the cylinder tube 21. The first gas chamber 26 is located on a first side of the piston 22 in the sliding direction. The second gas chamber 27 is located on a second side of the piston 22 in the sliding direction.

A rod 28 extending in the sliding direction is provided on the first side of the piston 22 in the sliding direction, and the discharge section 24 is provided at an end portion on the first side of the cylinder tube 21 in the sliding direction. The discharge section 24 is configured by forming an opening extending through one sealing block body 29 along the sliding direction. An end portion of the rod 28 on the first side in the sliding direction can be inserted into the opening of the discharge section 24.

The discharge section 24 is closed (as in the state illustrated in FIG. 4) upon the end portion of the rod 28 on the first side in the sliding direction being inserted into the opening of the discharge section 24. Upon the rod 28 sliding toward the second side in the sliding direction, the rod 28 is withdrawn from the opening and the discharge section 24 is opened. That is, the rod 28 is switchable between a closed state in which the rod 28 closes the discharge section 24 and an open state in which the rod 28 opens the discharge section 24 to allow gas ejection, in accordance with movement of the piston 22.

The gas supply and discharge means 23 is provided that is switchable between a supply state in which gas is supplied into the first gas chamber 26 and the second gas chamber 27 of the cylinder tube 21 and a release state in which the first gas chamber 26 and the second gas chamber 27 are opened to the outside.

Specifically, as shown in FIG. 4, the gas supply and discharge means 23 includes a first switching valve 33, a check valve 34, a second switching valve 35, and a quick exhaust valve 36. The gas supply and discharge means 23 switches the supply state of the gas from the compressor 32.

The first switching valve 33 is switchable between a supply state in which the gas is output from the compressor 32 to the first gas chamber 26 and a stop state in which the output is stopped. The second switching valve 35 is switchable between a supply state in which the gas is output from the compressor 32 to the second gas chamber 27 and a stop state in which the output is stopped. In response to the second switching valve 35 being switched to the supply state, the quick exhaust valve 36 allows the gas to be supplied into the second gas chamber 27. In response to the second switching valve 35 being switched to the stop state, the quick exhaust valve 36 is switched to a state of rapidly opening the second gas chamber 27 to the outside while blocking a reverse flow toward the second switching valve 35 with the check valve 34.

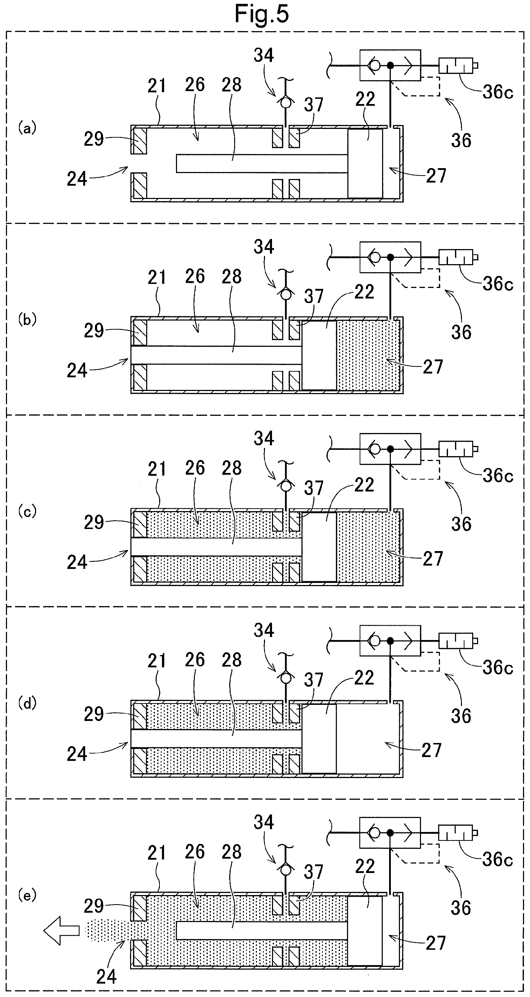

The quick exhaust valve 36 has a well-known configuration, and has an inlet 36a to which the gas is supplied from the second switching valve 35 and a discharge section 36b to which the gas inside the second gas chamber 27 is discharged. The quick exhaust valve 36 also includes a silencer 36c (see FIG. 5) that suppresses discharge noise while the gas inside the second gas chamber 27 is discharged.

The gas supply and discharge means 23 is capable of supplying the gas to the first gas chamber 26 and the second gas chamber 27 while the rod 28 is in a closed state. In response to the gas being supplied into the first gas chamber 26 and the second gas chamber 27, the gas is compressed in each of the first gas chamber 26 and the second gas chamber 27, in which the internal pressure increases. At this time, the rod 28 is maintained in the closed state due to a difference in the area of pressure acting surfaces of the piston 22. Thereafter, in response to the gas supply and discharge means 23 being switched from the supply state to the release state, the compressed gas in the second gas chamber 27 is released, switching the rod 28 to an open state and discharging the compressed gas from the discharge section 24.

A central sealing block body 37 is provided at an intermediate portion of the cylinder tube 21 in the sliding direction. The central sealing block body 37 is formed to be hollow to allow the rod 28 to be inserted. The piston 22 is slidable between the central sealing block body 37 and another sealing block body 38.

The cylinder tube 21 includes a first air supply section 39 and a second air supply section 40. The first air supply section 39 receives the gas supplied from the first switching valve 33. The second air supply section 40 receives the gas supplied from the second switching valve 35 via the quick exhaust valve 36. The first air supply section 39 is provided on the central sealing block body 37. The second air supply section 40 is provided on the other sealing block body 38.

A control device 45 for controlling operations of the compressor 32, the first switching valve 33, and the second switching valve 35 is provided. The control device 45 includes a microcomputer and is configured to execute various operations in the form of a control program. The control device 45 is configured to control operations of the compressor 32, the first switching valve 33, and the second switching valve 35 in accordance with a preset control program. Accordingly, the first switching valve 33, the second switching valve 35, and the control device 45 constitute a seeding control section H serving as a control section that controls operations of the compressor 32 and the injection mechanism 10.

### [Gas Ejection Section]

As shown in FIGS. 3 and 4, a guide member 25 that constitutes the gas ejection section 20 is provided outward of the first side of the cylinder tube 21 in the sliding direction. The guide member 25 is connected in communication with the opening of the discharge section 24. The gas discharged from the discharge section 24 is guided downward through the guide member 25 and discharged from the injection outlet 9 at a leading end thereof.

In response to the rod 28 being switched to the open state with the gas compressed in the internal space of the cylinder tube 21, the gas in the internal space is guided to the injection outlet 9 through the interior of the guide member 25 while maintaining high pressure without abruptly expanding at the discharge section 24. The seed N can be forcefully injected downward by the gas passing through the interior of the guide member 25.

The guide member 25 is mounted to the discharge section 24 of the cylinder tube 21 in an attachable and detachable manner. As shown in FIG. 4, a flange portion 25A is provided on an outer peripheral portion of an upper end portion of the guide member 25, and this flange portion 25A is bolted to an end portion of the cylinder tube 21. The guide member 25 can be removed from the cylinder tube 21 by releasing the bolt joint.

The supply section 17 is connected in communication with an intermediate portion of the guide member 25 in the up-down direction, thereby constituting a seed supply portion 41. The seed N fed from the feed section 8 through the supply section 17 is supplied into the interior of the guide member 25. The supplied seed N is injected toward the field W by the gas forcefully ejected from the discharge section 24.

### [Operation of Injection Mechanism]

Next, operations of the injection mechanism 10 will now be described. The operations are controlled by the control device 45 in accordance with a preset control program.

In a standby state illustrated in FIG. 5(a), both the first gas chamber 26 and the second gas chamber 27 are in an open state. In response to the second switching valve 35 being switched to the supply state, the gas is supplied into the second gas chamber 27 of the cylinder tube 21.

As illustrated in FIG. 5(b), in response to the gas being supplied into the second gas chamber 27, the piston 22 slides toward the first side in the sliding direction, and the rod 28 is switched to the closed state in which the discharge section 24 is closed.

As illustrated in FIG. 5(c), in response to a supply of the gas to the first gas chamber 26 being started while the supply of the gas to the second gas chamber 27 is continued, the internal pressure in the first gas chamber 26 and the second gas chamber 27 increases due to compression of the gas. This state corresponds to the supply state of the gas supply and discharge means 23. At this time, the rod 28 is maintained in the closed state. That is, since the area of the pressure acting surface of the piston 22 on the second gas chamber 27 side is greater than the area of the pressure acting surface of the piston 22 on the first gas chamber 26 side, the piston 22 is pushed toward the first gas chamber 26, and the rod 28 is maintained in the closed state.

As illustrated in FIG. 5(d), in response to the first switching valve 33 being switched to the stop state, the compressed gas stored in the second gas chamber 27 is discharged to the outside through the quick exhaust valve 36.

As illustrated in FIG. 5(e), as the internal pressure in the second gas chamber 27 decreases, the piston 22 moves toward the second side in the sliding direction (toward the second gas chamber 27) due to a pressure difference between the first gas chamber 26 and the second gas chamber 27, and the rod 28 enters the open state. This operation corresponds to the gas supply and discharge means 23 being switched to the release state.

As a result, the discharge section 24 is opened, and the compressed gas retained in the first gas chamber 26 is forcefully discharged from the discharge section 24. The gas forcefully discharged from the discharge section 24 is then guided to the injection outlet 9 via the guide member 25, and the seed N fed from the feed section 8 is injected toward the field W.

### [Injection Unit]

In the agricultural material injection apparatus according to the present embodiment, the injection mechanism 10 includes an injection unit UT having a plurality of injection outlets 9 at different positions along the traveling direction of the aircraft B. The seeding control section H controls the operation of the injection mechanism 10 so as to cause the injection unit UT to inject the seed N from the plurality of injection outlets 9 and thereafter move to a position corresponding to the next material supply location, and cause the injection unit UT to inject the seed N. Further, the injection unit UT includes a plurality of injection outlets 9 arranged at different positions along a direction orthogonal to the traveling direction of the aircraft B.

The following is a detailed description.

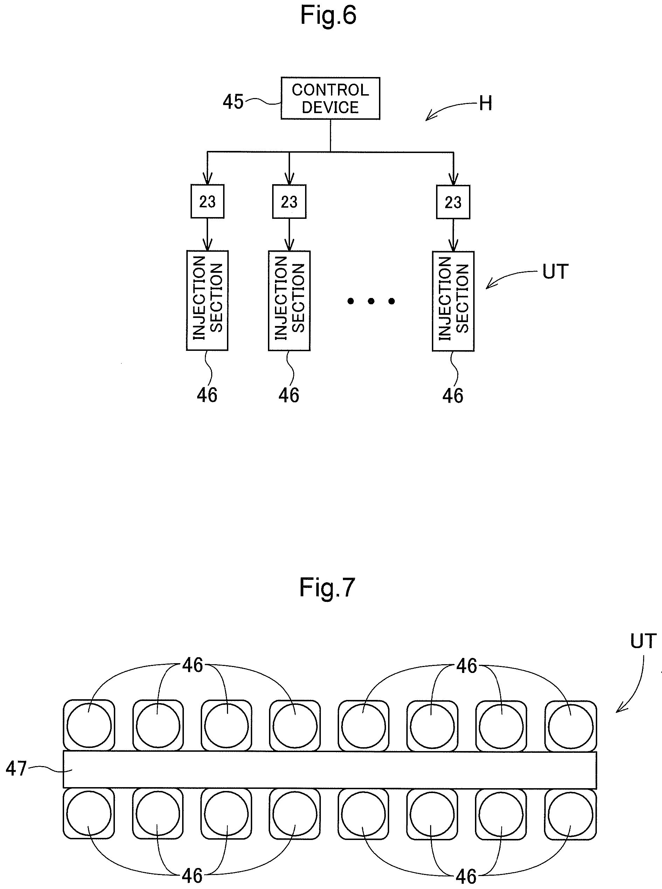

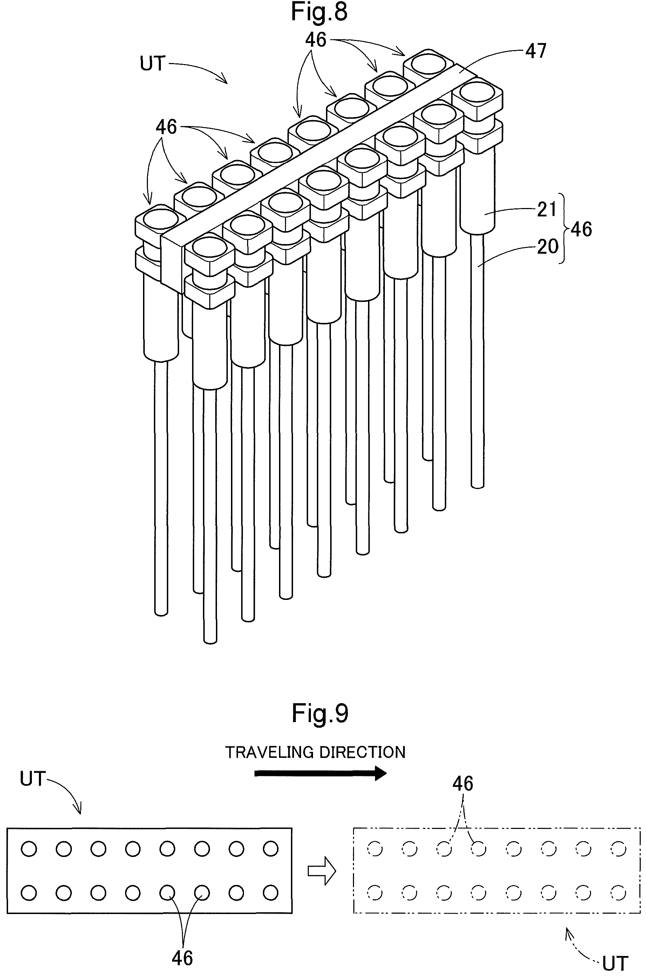

As shown in FIGS. 7 and 8, the injection unit UT includes eight injection sections 46, each having the cylinder tube 21 and the gas ejection section 20 integrally joined to each other, at different positions along the traveling direction of the aircraft B, and includes two injection sections 46 at different positions along the direction orthogonal to the traveling direction of the aircraft B. Accordingly, in this embodiment, the injection unit UT includes a total of 16 injection sections 46, and the injection outlet 9 is formed at a lower end portion of each injection section 46.

The 16 injection sections 46 are supported in a fixed state by a support frame 47. As mentioned above, each injection section 46 can inject the seed N into the field W using compressed gas. The seeding control section H operates and controls the first switching valve 33 and the second switching valve 35 of the gas supply and discharge means 23 such that all of the 16 injection sections 46 simultaneously inject the seed N.

The seeding control section H is capable of communicating information with a flight control section included in the aircraft B. The seeding control section H controls the operations of the first switching valve 33 and the second switching valve 35 of the gas supply and discharge means 23 so as to cause the injection unit UT to inject the seed N from the plurality of injection outlets 9 and thereafter move to a position corresponding to the next material supply location, and cause the injection unit UT to inject the seed N.

As shown in FIG. 9, in response to the aircraft B moving along the traveling direction a distance corresponding to the length of the injection unit UT along the traveling direction after the current injection operation is performed, it is determined that the aircraft B has moved to the location corresponding to the next material supply location, and the next injection operation is performed. Then, such an injection operation is repeatedly executed.

Even if a gas compression operation requires a predetermined time, the gas compression operation can be performed while the aircraft B is moving to a location corresponding to the next material supply location. As a result, unnecessary idle time, such as waiting for a time required for the gas compression operation to elapse before performing an injection operation, is eliminated, and seeding work can be performed efficiently.

### [Other Embodiments]

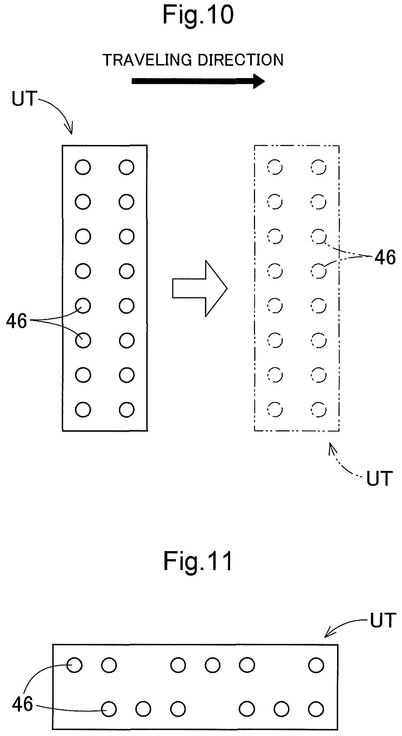

(1) The injection unit UT may be replaceable with another injection unit UT having a different arrangement pattern of the plurality of injection outlets 9 (injection sections 46). For example, as shown in FIG. 10, the injection unit UT may include two injection sections 46 at different positions along the traveling direction of the aircraft B, and may include eight injection sections 46 at different positions along the direction orthogonal to the traveling direction of the aircraft B. In addition, the number of injection sections 46 is not limited to the illustrated number, and two or more injection sections 46 need only be arranged along the traveling direction of the aircraft B. The number of injection sections 46 arranged along the traveling direction of the aircraft B may be three or more, and the number of injection sections 46 arranged along the direction orthogonal to the traveling direction of the aircraft B may be one, or may be two or more.
(2) A configuration may be employed in which the seeding control section H controls the operation of the injection mechanism 10 so as to inject the seed N (agricultural material) from a preset injection outlet 9 out of the plurality of injection outlets 9. For example, in the case where a field W includes an area in which the agricultural material is desired to be supplied and an area in which it is better not to supply the agricultural material, a configuration may be employed in which the operation is controlled to operate only an injection section 46 corresponding to the area in which the agricultural material is desired to be supplied, out of the plurality of injection sections 46, and not to operate an injection section 46 corresponding to the area in which it is better not to supply the agricultural material, as shown in FIG. 11
(3) The seeding control section H may be capable of changing and setting a combination of the injection outlets 9 for injecting the seed N (agricultural material) out of the plurality of injection outlets 9. For example, the seeding control section H may change the combination of the injection outlets 9 to an arrangement pattern in which the number of injection sections 46 along the traveling direction of the aircraft B and the number of injection sections 46 along the direction orthogonal to the traveling direction of the aircraft B are different in correspondence with a different field W. The seeding control section H may be configured to inject the seed N (agricultural material) in a state corresponding to this field W in accordance with a preset setting condition.
(4) A configuration may be adopted in which, as a gas compression section 18, a backflow prevention section that supplies gas from a gas supply source (compressor 32) only into the second gas chamber 27 and allows the gas to move only in one direction from the second gas chamber 27 toward the first gas chamber 26 is provided, whereby the gas is compressed not only in the second gas chamber 27 but also in the first gas chamber 26. In this case, simplification of the configuration can be achieved.
(5) The agricultural material is not limited to seed N, and fertilizer, a chemical agent, or the like may be injected.
(6) The aircraft B may be of a drive type in which the propellers are driven by an internal combustion engine, or a parallel hybrid drive type in which the propellers are driven using an electric motor and an internal combustion engine. Alternatively, a series hybrid drive type may be adopted in which a generator is driven by an internal combustion engine and an electric motor is driven by generated electric power. The aircraft is not limited to an unmanned flight configuration, and may be configured to fly while being piloted by a person.

### Industrial Applicability

The present invention can be applied to an agricultural material injection apparatus configured to be suspended and supported by an aircraft and to supply a granular agricultural material to a supply target location.

### Description of Reference Signs

- 7: Hopper (storage section)
- 8: Feed section
- 9: Injection outlet
- 10: Injection mechanism
- 18: Gas compression section
- 20: Gas ejection section
- 21: Cylinder tube
- 22: Piston
- H: Seeding control section (control section)
- UT: Injection unit

## Claims

1. An agricultural material injection apparatus configured to be suspended and supported by an aircraft and to supply a granular agricultural material to a supply target location, the agricultural material injection apparatus comprising:
a storage section configured to store the agricultural material; a feed section configured to feed the agricultural material stored in the storage section; an injection mechanism configured to inject the agricultural material fed by the feed section from an injection outlet to the supply target location; and a control section configured to control an operation of the injection mechanism,
wherein the injection mechanism includes an injection unit having a plurality of injection outlets at different positions along a traveling direction of the aircraft, and
the control section controls the operation of the injection mechanism in such a manner as to cause the injection unit to inject the agricultural material from the plurality of injection outlets and thereafter move to a location corresponding to a next material supply location, and subsequently to cause the injection unit to inject the agricultural material.

2. The agricultural material injection apparatus according to claim 1,
wherein the injection unit includes the plurality of injection outlets arranged at different positions along a direction orthogonal to the traveling direction of the aircraft.

3. The agricultural material injection apparatus according to claim 2,
wherein the injection unit is replaceable with another injection unit having a different arrangement pattern of the plurality of injection outlets.

4. The agricultural material injection apparatus according to claim 2,
wherein the control section controls the operation of the injection mechanism in such a manner as to inject the agricultural material from a preset injection outlet out of the plurality of injection outlets.

5. The agricultural material injection apparatus according to claim 2,
wherein the control section is capable of changing and setting a combination of the injection outlets for injecting the agricultural material out of the plurality of injection outlets.

6. The agricultural material injection apparatus according to any one of claims 1 to 5,
wherein the injection mechanism includes: a gas compression section configured to compress a gas; and a gas ejection section configured to eject the compressed gas to an outside, and is configured to inject the agricultural material with use of the gas ejected from the gas ejection section.

7. The agricultural material injection apparatus according to claim 6,
wherein the gas compression section includes a cylinder tube and a piston configured to slide within the cylinder tube, and
the gas ejection section ejects the gas supplied to an internal space of the cylinder tube and compressed, to an outside of the cylinder tube.
